# EUROPEAN PATENT APPLICATION

(11) **EP 3 885 138 A1**
(43) Date of publication of application: **29.09.2021**
(21) Application number: 21164494.3
(22) Date of filing: 24.03.2021
(51) Int. Cl.: B32B 27/34, B32B 1/08, B32B 7/12, B32B 27/08, B32B 27/30, B32B 27/32, F16L 11/00

(54) **MULTILAYER PIPE**

(30) Priority: 26.03.2020 IT 202000006361
(71) Applicant: Castello Italia SpA, 20123 Milano (MI) (IT)
(72) Inventor: FESTARI, Eleonora, 26010 Offanengo (CR) (IT); RESANI, Riccardo, 10045 Piossasco (TO) (IT); ROBASTO, Mario, 10094 Giaveno (TO) (IT)
(74) Representative: Mari, Marco Giovanni

(57) **Abstract**

The present invention relates to the industrial field of the production of pipes and it relates to a flexible multilayer pipe for compressed air, particularly useful for the distribution of compressed air to tools and machine tools, where the operating temperatures are maintained at relatively low values, not higher than about 60-70 °C.

The multilayer pipe (100, 200, 300) for compressed air comprises:
- a first layer (1);
- a second layer (2) adjacent to the first (1);
- a first intermediate layer (10) with the function of adhesive, wherein:
- said first layer (1) is made of PA6 polyamide;
- said second layer (2) is made of polyamide selected from PA11, PA12, aliphatic polyamides resulting from the condensation of an aliphatic diamine having 6 to 12 carbon atoms and an aliphatic diacid having 9 to 12 carbon atoms;
- said first intermediate layer (10) with the function of adhesive is a polyolefin functionalized with maleic anhydride,
and wherein said second layer (2) is the outer layer of the multilayer pipe (100, 200, 300).

## Description

### Technical field of application

The present invention relates to the industrial field of the production of pipes and it relates to a flexible multilayer pipe for the transport of compressed air, particularly suitable for the distribution of compressed air to tools and machine tools, where the operating temperatures are maintained at relatively low values, not higher than about 60-70 °C.

### Background art

For safety reasons, the regulations regarding the features and performances that the pipes must guarantee in the manufacturing sector are very strict: the pipes must be impermeable to vapors, resistant to high and low temperatures, fireproof, resistant to degradation caused by chemicals, tensile forces and mechanical failures.

Referring instead to the automotive industry, which historically used these pipes first, the fuel conveying pipes were originally made entirely of polyamide, i.e. single-layer pipes mostly in PA12 or PA11 with high performance, to ensure excellent chemical resistance to UV rays, at high and low temperatures, good mechanical resistance to traction, impact and breakage, excellent dimensional stability, with melting temperatures of approximately 172 °C and 182 °C, respectively.

The high cost of this material, however, has led the different sector of the manufacturing industry to study alternative solutions to the use of PA12 alone.

In the manufacturing industry, the economic aspect is much more relevant than in other industries, such as the automotive industry, where maximum attention must be paid to the aspect of resistance to the aggression of external agents and to the fluids conveyed by the pipes.

Since 1980, the possibility of making pipes with coextruded multilayer structures of circular shape has been increasingly developed, where PA12 constitutes only the outermost layer of the pipes, thus reducing the quantity of material and therefore costs. Further studies also led to evaluate the use, for the outermost layer, of PA11 or other aliphatic polyamides resulting from the condensation of an aliphatic diamine having from 6 to 12 carbon atoms and an aliphatic diacid having from 9 to 12 carbon atoms.

The low percentage of PA12 is well tolerated in the industrial manufacturing sector, precisely because particular protection against aggressive external agents is not required, since it is used essentially in closed and protected environments.

Recent technologies have led to the development of three-layer pipes: an external layer of PA12 homopolymer, an intermediate layer of material with an adhesive function and an internal layer, in contact with pressurized air, of PA6 homopolymer.

PA6 is the cheapest polyamide on the market, able to guarantee a good resistance to wear and mechanical stress, as well as being characterized by a low coefficient of friction and excellent thermal resistance having a melting temperature of about 220 °C.

As regards the intermediate layer, used as an adhesive, the use of the PA6/12 copolymer, that is a mixture of caprolactam and laurolactam, is currently known.

The following are indicative values of the aforementioned material.

| Parameter | ASTM standard | Reference value | Unit of measurement |
|---|---|---|---|
| Density | ISO 1183 | 1.04 ÷ 1.08 | g/cm3 |
| Elastic modulus | ISO 527 | 400 ÷ 1000 | Mpa |
| Load at 50% elongation | ISO 527 | ≈ 25 | Mpa |
| Breaking load | ISO 527 | ≈ 30 | Mpa |
| Elongation at break | ISO 527 | > 50 | % |
| Charpy impact resistance at 23 °C | ISO 179/2 | no break | KJ/m2 |
| Charpy impact resistance at -30 °C | ISO 179/2 | no break | KJ/m2 |
| Softening temperature HDT/A | | ≈ 50 | °C |
| Softening temperature HDT/B | | ≈ 115 | °C |
| DSC melting temperature | ISO 11357 | 210 ÷ 220 | °C |

From the document EP 1378696 B1 a multilayer pipe is known comprising:
- an internal layer of PA6 polyamide adapted in use to come into contact with compressed air;
- an outer layer is of polyamide selected from PA11, PA12, aliphatic polyamides resulting from the condensation of an aliphatic diamine having 6 to 12 carbon atoms and an aliphatic diacid having 9 to 12 carbon atoms;
- an intermediate binding layer based on particular types of copolyamides, including PA6/12, obtained with specific condensation processes.

Disadvantageously, copolyamides easily absorb moisture and have high costs.

Furthermore, copolyamides do not function as a universal binder for all polyamides; for example, PA6/12 works as an adhesive between PA6 and PA12, but it would not work for example between PA10/10 and PA6.

Below is a matrix of the possible combinations between outer layer, inner layer and possible binder. In the practical availability of the polyamide market, there are essentially only two types of polyamides capable of acting as a binder: PA6/10 and PA6/12.

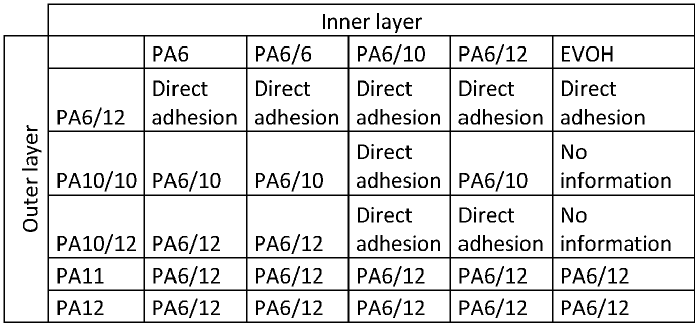

As an alternative to copolyamides, functionalized polyolefins are used as an adhesive.

Polyolefins is the generic term used to describe a family of polymers composed of olefin monomers. The family of polyolefins includes polypropylene and polyethylene, differentiated by their physical-mechanical features and partly by the polymerization process.

Again from document EP 1378696 B1, the use of a mixture of polyamides with polyolefins functionalized with carboxylic acid or carboxylic acid anhydride as a binding layer is known: carboxylic acids are in fact polar and can form hydrogen bonds both by receiving with the carbonyl group (-C=O) and by donating with the hydroxyl group (-OH).

From document US 2018/0371301 A1, a multilayer pipe is known comprising a first layer of PA6 polyamide, a second layer external to the pipe made of PA12 polyamide, and an intermediate layer acting as an adhesive comprising a functionalized polyolefin. Since said multilayer pipe is specifically designed for the automotive industry, the quantity of PA12 must be predominant to satisfy the requirements imposed by this application, and the quantity of PA6 used cannot in any case exceed certain limits. In particular, inside the pipe, the thickness of the PA6 layer is a compromise between the need for economic savings, greater thermal resistance, resistance to zinc chloride, limits in tests at low temperatures, permeability problems, difficulties in sealing the connections between pipes made using known connectors of the "fir tree" type, tested after thermal aging.

In document US 2018/0371301 A1, the following subdivision of the layers for a multilayer pipe with an external diameter of 8 mm and an internal diameter of 6 mm is reported:

| | | | |
|---|---|---|---|
| **LAYER THICKNESS mm** | Inner layer | PA6 | 0.50 |
| | Intermediate layer | Functionalized PP homopolymer | 0.05 |
| | Outer layer | PA12 | 0.45 |
| **TOTAL THICKNESS mm** | | | 1.00 |

Again from document US 2018/0371301 A1, a multilayer pipe is known comprising an additional intermediate layer of ethylene/vinyl alcohol copolymer (EVOH) placed between said layer acting as an adhesive and said internal layer of PA6. In the automotive industry, EVOH is always used only as an intermediate layer. Disadvantageously, the EVOH placed between the PA layers favors the accumulation of volatile substances in the interface with the adhesive layer, creating delamination phenomena that also force to the use of a single type of connector, that is a "fir tree" connector. In aging tests with fluids such as hydrocarbons (even more so if of bio origin) and/or solvents, delamination phenomena arise due to the accumulation of permeate in the adhesion surface when the EVOH barrier layer is internal and not in contact with the fluid carried by the pipe. Disadvantageously, the layers thus completely delaminated are not able to ensure the correct functionality of the pipeline.

From US patent 5 076 329 A a similar structure for a multilayer pipe specific for the automotive industry is known, where EVOH is in any case placed only as an intermediate layer.

From US 6,066,377, again in the field of polyolefins used as an adhesive, the use of high-density polyethylene (HDPE) as an adhesive between two layers of polyamide in multilayer pipes is known.

Disadvantageously, the mechanical properties of HDPE are insufficient to pass the tests to which the flexible pipes used in the industrial manufacturing sector are subjected, and the pipe in general is weak specifically due to the insufficient operating temperature.

The use of low density polyethylene (LDPE and LLDPE) is also known, which however has a melting temperature that is too low to allow subsequent thermoforming and/or use at temperatures above the temperature of T ≈ 50 °C.

By way of example, the products in use include:
- PE-based MITSUI GR6E:
   MFR 1.2 g/10min, density 0.92 g/cm³, melting T = 122 °C;
- PE-based MITSUI GR7E:
   MFR 1.0 g/10min, density 0.93 g/cm³, melting T = 127 °C.

### Disclosure of the invention

The object of the present invention is to eliminate the aforementioned drawbacks and disadvantages.

The main object of the present invention is to produce a flexible multilayer pipe, particularly suitable for use with compressed air in industrial plants of the manufacturing sector, which is cost-effective and therefore does not contain high percentages of PA12, but at the same time guarantees performances comparable to those of a single-layer PA12 pipe, especially in relation to the melting temperature values, mechanical resistance and duration and protection from external chemical agents.

The objects are achieved with a multilayer tube for compressed air comprising:
- a first layer;
- a second layer adjacent to the first;
- a first intermediate layer with the function of adhesive, characterized in that:
- said first layer is made of PA6 polyamide;
- said second layer is made of polyamide selected from PA11, PA12, aliphatic polyamides resulting from the condensation of an aliphatic diamine having 6 to 12 carbon atoms and an aliphatic diacid having 9 to 12 carbon atoms;
- said first intermediate layer with the function of adhesive is a polyolefin functionalized with maleic anhydride,
wherein said second layer is the outer layer of the multilayer pipe.

Advantageously, said polyolefin functionalized with maleic anhydride is polypropylene homopolymer.

In particularly preferred variants, said polypropylene homopolymer functionalized with maleic anhydride has:
- a melting temperature of between 157 and 170 °C;
- a standard density of between 0.87 and 0.93 g/cm³;
- an elastic modulus of between 800 and 1300 MPa.

According to a first aspect of the invention:
- said first layer comprises about 63-81% of the overall material of the multilayer pipe;
- said second layer comprises about 14-26% of the overall material of the multilayer pipe;
- said first intermediate layer with the function of adhesive comprises about 5-12% of the overall material of the multilayer pipe.

In a possible variant of the invention, said multilayer pipe comprises a third layer of ethylene/vinyl alcohol copolymer EVOH placed as a coating of said first layer of PA6 and acting as a chemical barrier, where
- said first layer comprises about 48-70% of the overall material of the multilayer pipe;
- said second layer about 13-26% of the overall material of the multilayer pipe;
- said first intermediate layer with the function of adhesive comprises about 5-12% of the overall material of the multilayer pipe;
- said third layer of EVOH comprises about 10-20% of the overall material of the multilayer pipe.

In a further possible variant of the invention, said multilayer pipe comprises:
- a fourth layer adjacent to said first layer, inside said pipe, made of polyamide selected from PA11, PA12, aliphatic polyamides resulting from the condensation of an aliphatic diamine having 6 to 12 carbon atoms and an aliphatic diacid having 9 to 12 carbon atoms;
- a second intermediate layer with the function of adhesive interposed between said first and fourth layer,
- where said second intermediate layer with the function of adhesive is a polyolefin functionalized with maleic anhydride.

Advantageously:
- said first layer comprises about 40-65% of the overall material of the multilayer pipe;
- said second and fourth layer comprise about 25-40% of the overall material of the multilayer pipe;
- said first and second intermediate layer with the function of adhesive comprise about 10-20% of the overall material of the multilayer pipe.

The use of maleic anhydride in the adhesive layer offers the advantage that it can react to both the double bond and the anhydride group.

The addition reactions to the double bond typical of maleic are in fact:
- Diels-Alder reaction, since maleic anhydride is a strong dienophile;
- hydration with production of HOOCCH2-CHOH-COOH malic acid and fumaric acid as a by-product.

The reactions of the anhydride group of maleic are instead:
- hydrolysis with production of maleic acid, cis-HO2CCH=CHCO2H;
- esterification with the production of the mono or di-ester, e.g. cis-HO2CCH=CHCO2CH3.

More generally, the advantages obtained with the present invention are the following:
- the use of PA polyamide with a low modulus of elasticity guarantees the flexibility required by manufacturing applications;
- the use of impact-stabilized PA polyamide prevents embrittlement due to aging and guarantees constant performance over time;
- the specific use of PA6 even of 65-80% of the total material that makes the pipe allows a significant saving on the overall cost of the pipe;
- the use, as an intermediate binding layer, of a polyolefin based on polypropylene homopolymer functionalized with maleic anhydride guarantees a greater temperature resistance compared to other polyolefins (especially compared to polyethylene-based polyolefins);
- the use of a layer of EVOH inside the pipe increases the chemical resistance of the pipe, preventing the direct aggression of PA6, eliminates the risk of delamination due to the accumulation of permeate under the barrier layer, and allows the use of "push to fit" connectors specifically used in the industrial sector and different from the "fir tree" connectors typical of the automotive sector and bound by the use of EVOH as an intermediate layer.

### Brief description of the drawings

The advantages of the invention will become apparent from the following description, in which preferred embodiments are described, by way of non-limiting example and with the aid of the figures, where:

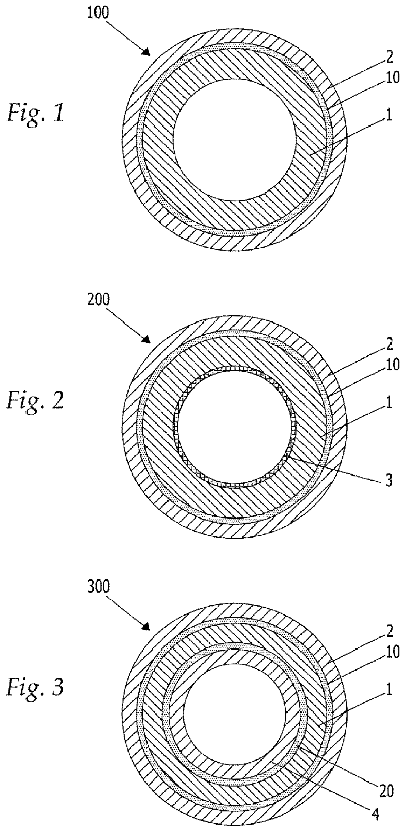

Figures 1, 2 and 3 show a schematic cross-section with deformed proportions for clarity of representation, of a multilayer pipe for compressed air according to three possible variants of the invention.

### Detailed description of a preferred embodiment of the invention

With reference to the Figures, a multilayer pipe 100, 200, 300 for the transport of compressed air is illustrated, suitable for use in the industrial and manufacturing field.

The external diameter of a multilayer pipe 100, 200, 300 according to the invention can vary between 4 and 30 mm, advantageously between 4 and 24 mm, while its overall thickness can vary between 0.75 and 5 mm.

In the variant of Figure 1, said multilayer pipe 100 comprising three layers:
- a first inner layer 1, which will come into direct contact with the compressed air, of PA6 polyamide;
- a second outer layer 2 of polyamide selected from PA11, PA12, aliphatic polyamides resulting from the condensation of an aliphatic diamine having 6 to 12 carbon atoms and an aliphatic diacid having 9 to 12 carbon atoms;
- a first intermediate layer 10 with the function of adhesive.

Said first intermediate layer 10 with the function of adhesive is a polyolefin functionalized with maleic anhydride.

Among the polyolefins, the best results were obtained using polypropylene homopolymer.

Advantageously, particularly performing is a polypropylene homopolymer-based adhesive functionalized with maleic anhydride, having the following features:
- a melting temperature of between 157 and 170 °C;
- a standard density of between 0.87 and 0.93 g/cm³;
- an elastic modulus of between 800 and 1300 MPa.

By way of example, a table is reported with an indication of the distribution of the thickness of the individual layers that make up a multilayer pipe according to the invention, having specifically an outer diameter of 8 mm and an inner diameter of 6 mm:

| | | | |
|---|---|---|---|
| **LAYER THICKNESS mm** | Inner layer | PA6 | 0.70 |
| | Intermediate layer | Functionalized PP homopolymer | 0.10 |
| | Outer layer | PA10.12 or PA11 or PA12 or... | 0.20 |
| **TOTAL THICKNESS mm** | | | 1.00 |

It is evident that the thickness of the inner PA6 layer is preponderant with respect to the outer PA12 layer.

Below is a summary table showing the percentages (Layer Area%), in reference to the total area of the pipe (Total Area%), of the materials that make up the three layers of the pipe, in relation to the inner diameter, nominal outer diameter and consequently overall thickness of the pipe.

| | | | | | | | | | |
|---|---|---|---|---|---|---|---|---|---|
| Nominal outer diameter | | | 4 mm | 6 mm | 8 mm | 9 mm | 10 mm | 10 mm | |
| Inner diameter (mm) | | | 2 | 4 | 6 | 6 | 8 | 7.5 | |
| Per layer (%) | First layer | PA6 | 63.00% | 65.80% | 67.00% | 73.09% | 67.67% | 73.39% | |
| | Intermediate layer | Functionalized PP homopolymer | 11.67% | 11.00% | 10.71% | 7.47% | 10.56% | 8.69% | |
| | Second layer | PA10.12 or PA11 or PA12 or other | 25.33% | 23.20% | 22.29% | 19.44% | 21.78% | 17.92% | |
| Total (%) | | | 100% | 100% | 100% | 100% | 100% | 100% | |
| | | | | | | | | | |
| Nominal outer diameter | | | 11 mm | 12 mm | 12.5 mm | 14 mm | 15 mm | 16 mm | |
| Inner diameter (mm) | | | 8 | 9 | 10 | 10 | 12 | 13 | |
| Per layer (%) | First layer | PA6 | 73.84% | 74.11% | 73.97% | 80.09% | 74.68% | 74.82% | |
| | Intermediate layer | Functionalized PP homopolymer | 7.30% | 7.24% | 8.53% | 5.58% | 7.11% | 7.08% | |
| | Second layer | PA10.12 or PA11 or PA12 or other | 18.86% | 18.65% | 17.49% | 14.32% | 18.21% | 18.10% | |
| Total (%) | | | 100% | 100% | 100% | 100% | 100% | 100% | |
| | | | | | | | | | |
| Nominal outer diameter | | | 16 mm | 18 mm | 18 mm | 19 mm | 20 mm | 22 mm | 24 mm |
| Inner diameter (mm) | | | 12 | 15 | 14 | 15 | 16 | 18 | 20 |
| Per layer (%) | First layer | PA6 | 77.71% | 75.04% | 78.00% | 78.12% | 78.22% | 78.40% | 78.55% |
| | Intermediate layer | Functionalized PP homopolymer | 5.46% | 7.03% | 5.41% | 5.38% | 5.36% | 5.32% | 5.30% |
| | Second layer | PA10.12 or PA11 or PA12 or other | 16.82% | 17.93% | 16.59% | 16.50% | 16.42% | 16.28% | 16.16% |
| Total (%) | | | 100% | 100% | 100% | 100% | 100% | 100% | 100% |

In the variant of Figure 2, said multilayer pipe 200 comprising an additional third layer 3 of ethylene/vinyl alcohol copolymer EVOH placed to coat said first inner layer 1 of PA6 and acting as a chemical barrier. The first intermediate layer 10 of adhesive is always polypropylene homopolymer functionalized with maleic anhydride.

Below is a summary table showing the percentages (Layer Area%), in reference to the total area of the pipe (Total Area%), of the materials that make up the four layers of the pipe, in relation to the inner diameter, nominal outer diameter and consequently overall thickness of the pipe.

| | | | | | | | | | |
|---|---|---|---|---|---|---|---|---|---|
| Nominal outer diameter | | | 4 mm | 6 mm | 8 mm | 9 mm | 10 mm | 10 mm | |
| Inner diameter (mm) | | | 2 | 4 | 6 | 6 | 8 | 7.5 | |
| Per layer (%) | Third layer | EVOH | 14.67% | 16.80% | 17.71% | 13.89% | 18.22% | 14.08% | |
| | First layer | PA6 | 48.33% | 49.00% | 49.29% | 59.20% | 49.44% | 59.31% | |
| | Intermediate layer | Functionalized PP homopolymer | 11.67% | 11.00% | 10.71% | 7.47% | 10.56% | 8.69% | |
| | Second layer | PA10.12 or PA11 or PA12 or other | 25.33% | 23.20% | 22.29% | 19.44% | 21.78% | 17.92% | |
| Total (%) | | | 100% | 100% | 100% | 100% | 100% | 100% | |
| | | | | | | | | | |
| Nominal outer diameter | | | 11 mm | 12 mm | 12.5 mm | 14 mm | 15 mm | 16 mm | |
| Inner diameter (mm) | | | 8 | 9 | 10 | 10 | 12 | 13 | |
| Per layer (%) | Third layer | EVOH | 14.47% | 14.68% | 14.51% | 10.68% | 15.12% | 15.23% | |
| | First layer | PA6 | 59.37% | 59.43% | 59.47% | 69.42% | 59.56% | 59.59% | |
| | Intermediate layer | Functionalized PP homopolymer | 7.30% | 7.24% | 8.53% | 5.58% | 7.11% | 7.08% | |
| | Second layer | PA10.12 or PA11 or PA12 or other | 18.86% | 18.65% | 17.49% | 14.32% | 18.21% | 18.10% | |
| Total (%) | | | 100% | 100% | 100% | 100% | 100% | 100% | |
| | | | | | | | | | |
| Nominal outer diameter | | | 16 mm | 18 mm | 18 mm | 19 mm | 20 mm | 22 mm | 24 mm |
| Inner diameter (mm) | | | 12 | 15 | 14 | 15 | 16 | 18 | 20 |
| Per layer (%) | Third layer | EVOH | 13.18% | 15.40% | 13.41% | 13.50% | 13.58% | 13.73% | 13.84% |
| | First layer | PA6 | 64.54% | 59.64% | 64.59% | 64.62% | 64.64% | 64.68% | 64.70% |
| | Intermediate layer | Functionalized PP homopolymer | 5.46% | 7.03% | 5.41% | 5.38% | 5.36% | 5.32% | 5.30% |
| | Second layer | PA10.12 or PA11 or PA12 or other | 16.82% | 17.93% | 16.59% | 16.50% | 16.42% | 16.28% | 16.16% |
| Total (%) | | | 100% | 100% | 100% | 100% | 100% | 100% | 100% |

In the variant of Figure 3, a five-layer multilayer pipe 300 is illustrated, comprising, in addition to the stratigraphy of Figure 1:
- a fourth layer 4 adjacent to said first layer 1, inside said pipe 300, made of polyamide selected from PA11, PA12, aliphatic polyamides resulting from the condensation of an aliphatic diamine having 6 to 12 carbon atoms and an aliphatic diacid having 9 to 12 carbon atoms;
- a second intermediate layer 20 acting as an adhesive interposed between said first 1 and fourth 4 layers, again comprising a polyolefin, polypropylene homopolymer, functionalized with maleic anhydride.

Below is a summary table showing the percentages (Layer Area%), in reference to the total area of the pipe (Total Area%), of the materials that make up the five layers of the pipe, in relation to the inner diameter, nominal outer diameter and consequently overall thickness of the pipe.

| | | | | | | | | | |
|---|---|---|---|---|---|---|---|---|---|
| Nominal outer diameter | | | 4 mm | 6 mm | 8 mm | 9 mm | 10 mm | 10 mm | |
| Inner diameter (mm) | | | 2 | 4 | 6 | 6 | 8 | 7.5 | |
| Per layer (%) | First layer | PA6 | 40.00% | 40.00% | 40.00% | 53.33% | 40.00% | 52.00% | |
| | First and second intermediate layer | Functionalized PP homopolymer | 20.00% | 20.00% | 20.00% | 13.33% | 20.00% | 16.00% | |
| | Second and fourth layer | PA10.12 or PA11 or PA12 or other | 40.00% | 40.00% | 40.00% | 33.33% | 40.00% | 32.00% | |
| Total (%) | | | 100% | 100% | 100% | 100% | 100% | 100% | |
| | | | | | | | | | |
| Nominal outer diameter | | | 11 mm | 12 mm | 12.5 mm | 14 mm | 15 mm | 16 mm | |
| Inner diameter (mm) | | | 8 | 9 | 10 | 10 | 12 | 13 | |
| Per layer (%) | First layer | PA6 | 53.33% | 53.33% | 52.00% | 65.00% | 53.33% | 53.33% | |
| | First and second intermediate layer | Functionalized PP homopolymer | 13.33% | 13.33% | 16.00% | 10.00% | 13.33% | 13.33% | |
| | Second and fourth layer | PA10.12 or PA11 or PA12 or other | 33.33% | 33.33% | 32.00% | 25.00% | 33.33% | 33.33% | |
| Total (%) | | | 100% | 100% | 100% | 100% | 100% | 100% | |
| | | | | | | | | | |
| Nominal outer diameter | | | 16 mm | 18 mm | 18 mm | 19 mm | 20 mm | 22 mm | 24 mm |
| Inner diameter (mm) | | | 12 | 15 | 14 | 15 | 16 | 18 | 20 |
| Per layer (%) | First layer | PA6 | 60.00% | 53.33% | 60.00% | 60.00% | 60.00% | 60.00% | 60.00% |
| | First and second intermediate layer | Functionalized PP homopolymer | 10.00% | 13.33% | 10.00% | 10.00% | 10.00% | 10.00% | 10.00% |
| | Second and fourth layer | PA10.12 or PA11 or PA12 or other | 30.00% | 33.33% | 30.00% | 30.00% | 30.00% | 30.00% | 30.00% |
| Total (%) | | | 100% | 100% | 100% | 100% | 100% | 100% | 100% |

In all the variants illustrated, excellent results were obtained using the ADMER™ QB520E product from MITSUI CHEMICAL as an intermediate layer 10, 20 acting as an adhesive.

ADMER™ QB520E, a polyolefin functionalized with maleic anhydride, is an adhesive resin based on polypropylene homopolymer with a low MFR (index of the ease of flow of a molten polymer), and is normally used for the construction of pipes, as an adhesive between polypropylene and EVOH (especially in the food sector) or between polypropylene and PA polyamides.

Surprisingly, it was discovered that ADMER™ QB520E is also particularly effective as an adhesive between different types of polyamide, in particular between PA12 and PA6.

Below is the technical data sheet of the ADMER™ QB520E product.

| Parameter | ISO standard | Reference value | Unit of measurement |
|---|---|---|---|
| MFR (230 °C, 2.16kg) | D1238 | 1.8 | g/10 min |
| Density | D1505 | 0.9 | g/cm3 |
| Stress at yield | D638 | 21 | Mpa |
| Breaking load | D638 | 16 | Mpa |
| Elongation at break | D638 | > 500 | % |
| Izod impact resistance | D256 | 470 | J/m2 |
| Shore hardness | D2240 | 64 | Shore D |
| Vicat softening temperature | D1525 | 140 | °C |
| Melting temperature | D3418 | 161 | °C |

To demonstrate the excellent chemical-physical performance, but also in terms of containment of production costs, of a multilayer pipe according to the invention compared with different types of single and multilayer pipes used in the manufacturing sector and already illustrated above as examples of the prior art, the following table is shown, where:
- pipe A refers to a single-layer tube made entirely of PA12 polyamide;
- pipe B refers to a single-layer tube made entirely of PA6 polyamide;
- pipe C refers to a five-layer tube according to the teaching of patent EP 1378696 B1 where substantially the two end layers comprise PA11 or PA12 polyamide, the central layer consists of a core made of an economical material with lower performance, while the two layers of adhesive between the core and the polyamides are made of copolyamide (PA6/12);
- pipe D refers to a multilayer pipe of the type comprising an outer layer of PA12, an inner layer of PA6 and an intermediate layer of adhesive made with a polyolefin of the polyethylene family PELLD functionalized with maleic anhydride;
- pipe E refers to a multilayer pipe according to a possible variant of the invention (illustrated in Fig. 1) comprising an outer layer of PA12, an inner layer of PA6 and an intermediate layer of adhesive made with a polyolefin of the polypropylene homopolymer type functionalized with maleic anhydride.

| | Pipe A | Pipe B | Pipe C | Pipe D | Pipe E |
|---|---|---|---|---|---|
| | Single-layer PA12 | Single-layer PA6 | Multilayer PAXX/YY | Multilayer PELLD | Multilayer PPomopol |
| Density (g/cm³) | 1.01 - 1.04 | 1.05 - 1.14 | | | |
| Moisture absorption (%) | 1.5 | 9 | | | |
| Melting temperature (°C) | 172 - 176 | 214 - 220 | | | |
| Adhesive layer density (g/cm³) | - | - | 1.05 - 1.1 | 0.90-0.93 | 0.87-0.93 |
| Moisture absorption of adhesive layer (%) | - | - | 2-9 | 0.05 | ∼0.2 |
| Adhesive layer melting temperature (°C) | - | - | 190-210 | 115 - 130 | 157 - 170 |
| Softening point HDT/A (°C) | ∼45 | ∼45 | ∼50 | 35 - 45 | 55 - 65 |
| Elastic modulus (N/mm²) | 350 - 450 | 450 - 600 | | | |
| Elastic modulus of adhesive layer (N/mm²) | - | - | 400 - 800 | ∼1200 | 800-1300 |
| Cost (€/kg) | 100% | ∼53% | ∼85% | | ∼70% |
| Cost of adhesive layer (€/kg) | - | - | ∼94% | | ∼41% |

The comparison of the values highlights:
- the lower moisture absorption of the adhesive layer of polyolefins (PE or PP) functionalized with maleic anhydride compared to the value corresponding to the multilayer pipe C which uses a copolyamide as adhesive;
- the lower melting temperature (and therefore the lower operating temperature) of polyolefins compared to copolyamides; in particular, polyolefins from the polypropylene family are selected over polyethylene for their higher melting temperature;
- being 100 the cost of a kilogram of a single-layer pipe made entirely of PA12, the lower percentage cost of a multilayer pipe E which uses polypropylene homopolymer as adhesive compared to multilayer pipe C which uses a copolyamide;
- the higher cost of a copolyamide adhesive compared to a polypropylene homopolymer adhesive (evident difference on the finished product as just mentioned above).

Using the same material samples (PIPE A, PIPE B, PIPE C, PIPE D and PIPE E) for a specific pipe with dimensions Ø = 8.0 - thickness = 1.0 mm, further tests were then carried out in order to demonstrate the substantial equivalence of technical performance, in terms of burst pressure at various temperatures, cold impact, thermal stability and chemical resistance, in particular between the solution with PA6/12 copolyamide binder (PIPE C) and the solution according to the invention with polypropylene homopolymer binder (PIPE E).

Even slightly more performing is the structure with polypropylene homopolymer (again compared to the structure with PA6/12) in the bursting tests thanks to the lower moisture absorption (0.2% compared to 2-9%) and the higher elastic modulus (1200N/mm2 against 400-800 N/mm2 for copolyamides).

| | Pipe A | Pipe B | Pipe C | Pipe D | Pipe E |
|---|---|---|---|---|---|
| Ø=8.0*1.0mm | Single-layer PA12 | Single-layer PA6 | Multilayer PAXX/YY | Multilayer PELLD | Multilayer PPomopol |
| Bursting pressure at T = 23 °C (bar) | 57 | 63 | ∼65 | | ∼75 |
| Bursting pressure at T = 80°C (bar) | 26.7 | 27 | 33 - 35.5 | | ∼33 |
| Bursting pressure at T = 100°C (bar) | 22.8 | 24.5 | 30-31 | NO | ∼30 |
| Bursting pressure at T = 125°C (bar) | 18 | 19.5 | 23.5-24.4 | NO | ∼25.5 |
| Cold impact at T = - 40 °C (J) | >6 | <7.5 | >7.5 | | >7.5 |
| Cold impact at T = - 23°C (J) | >7.5 | >7.5 | >7.5 | | >7.5 |
| Thermal stability (72h at T = 150 °C) | OK | OK | OK | NO | OK |
| Impact after thermal stability cycle | OK | OK | OK | NO | OK |
| Chemical resistance to ethanol, zinc chloride, acids, oils, etc. | OK | NO | OK | OK | OK |

The multilayer pipe 100, 200, 300 for compressed air object of the present invention, for all the variants described above, has been validated according to the ISO 7628:2010 standard under operating conditions of pressure p = 10 bar and temperature T = 100 °C.

## Claims

1. Multilayer pipe (100, 200, 300) for compressed air comprising:
- a first layer (1);
- a second layer (2) adjacent to the first (1);
- a first intermediate layer (10) with the function of adhesive, **characterized in that**:
- said first layer (1) is made of PA6 polyamide;
- said second layer (2) is made of polyamide selected from PA11, PA12, aliphatic polyamides resulting from the condensation of an aliphatic diamine having 6 to 12 carbon atoms and an aliphatic diacid having 9 to 12 carbon atoms;
- said first intermediate layer (10) with the function of adhesive is a polyolefin functionalized with maleic anhydride,
wherein said second layer (2) is the outer layer of the multilayer pipe (100, 200, 300).

2. Multilayer pipe (100) for compressed air according to claim 1, **characterized in that**:
- said first layer (1) comprises about 63-81% of the overall material of the multilayer pipe;
- said second layer (2) comprises about 14-26% of the overall material of the multilayer pipe;
- said first intermediate layer (10) with the function of adhesive comprises about 5-12% of the overall material of the multilayer pipe.

3. Multilayer pipe (200) for compressed air according to claim 1, **characterized in that** it comprises a third layer (3) of ethylene/vinyl alcohol copolymer EVOH placed to coat said first layer (1) of PA6 and acting as a chemical barrier.

4. Multilayer pipe (200) for compressed air according to claim 3, **characterized in that**:
- said first layer (1) comprises about 48-70% of the overall material of the multilayer pipe;
- said second layer (2) comprises about 13-26% of the overall material of the multilayer pipe;
- said first intermediate layer (10) with the function of adhesive comprises about 5-12% of the overall material of the multilayer pipe;
- said third layer (3) of EVOH comprises about 10-20% of the overall material of the multilayer pipe.

5. Multilayer pipe (300) for compressed air according to claim 1, **characterized in that** it comprises:
- a fourth layer (4) adjacent to said first layer (1), inside said pipe, made of polyamide selected from PA11, PA12, aliphatic polyamides resulting from the condensation of an aliphatic diamine having 6 to 12 carbon atoms and an aliphatic diacid having 9 to 12 carbon atoms;
- a second intermediate layer (20) with the function of adhesive interposed between said first (1) and fourth (4) layer,
- wherein said second first intermediate layer (20) is a polyolefin functionalized with maleic anhydride.

6. Multilayer pipe (300) for compressed air according to claim 5, **characterized in that**:
- said first layer (1) comprises about 40-65% of the overall material of the multilayer pipe;
- said second (2) and fourth (4) layer comprise about 25-40% of the overall material of the multilayer pipe;
- said first and second intermediate layer (10, 20) with the function of adhesive comprise about 10-20% of the overall material of the multilayer pipe.

7. Multilayer pipe (100, 200, 300) for compressed air according to claim 1, **characterized in that** said polyolefin functionalized with maleic anhydride is polypropylene homopolymer.

8. Multilayer pipe (100, 200, 300) for compressed air according to claim 7, **characterized in that** said polypropylene homopolymer functionalized with maleic anhydride has a melting temperature of between 157 and 170 °C.

9. Multilayer pipe (100, 200, 300) for compressed air according to claim 7, **characterized in that** said polypropylene homopolymer functionalized with maleic anhydride has a standard density of between 0.87 and 0.93 g/cm³.

10. Multilayer pipe (100, 200, 300) for compressed air according to claim 7, **characterized in that** said polypropylene homopolymer functionalized with maleic anhydride has an elastic modulus comprised between 800 and 1300 Mpa.
